Europäisches Patentamt

(19) European Patent Office

Office européen des brevets

(11) **EP 1 014 110 B1**

(12) **FASCICULE DE BREVET EUROPEEN**

(45) Date de publication et mention
de la délivrance du brevet:
**23.03.2005 Bulletin 2005/12**

(51) Int Cl.⁷: **G01S 17/32**, G01S 13/32

(21) Numéro de dépôt: **99403199.5**

(22) Date de dépôt: **17.12.1999**

(54) **Système Lidar et application à un système radar**

Lidarsystem und Anwendung in einem Radarsystem

Lidar system and application to a radar system

(84) Etats contractants désignés:
**DE GB IT NL**

(30) Priorité: **18.12.1998 FR 9816020**

(43) Date de publication de la demande:
**28.06.2000 Bulletin 2000/26**

(73) Titulaire: **Thales**
**75008 Paris (FR)**

(72) Inventeurs:
• **Dolfi, Daniel, Departement Brevets**
**94117 Arcueil Cedex (FR)**
• **Huignard, Jean-Pierre, Departement Brevets**
**94117 Arcueil Cedex (FR)**
• **Chazelas, Jean, Departement Brevets**
**94117 Arcueil Cedex (FR)**
• **Breugnot, Sébastien, Departement Brevets**
**94117 Arcueil Cedex (FR)**

(56) Documents cités:
**FR-A- 2 688 900**     **FR-A- 2 757 640**
**US-A- 5 082 364**     **US-A- 5 177 488**
**US-A- 5 682 238**

• **DOLFI D ET AL: "Optically controlled true time delays for phased array antenna" OPTICAL TECHNOLOGY FOR MICROWAVE APPLICATIONS IV, ORLANDO, FL, USA, 28-29 MARCH 1989, vol. 1102, pages 152-161, XP002112724 Proceedings of the SPIE - The International Society for Optical Engineering, 1989, USA ISSN: 0277-786X**
• **DOLFI D ET AL: "TWO-DIMENSIONAL OPTICAL ARCHITECTURE FOR TIME-DELAY BEAM FORMING IN A PHASED-ARRAY ANTENNA" OPTICS LETTERS, vol. 16, no. 4, 15 février 1991 (1991-02-15), pages 255-257, XP000176143 ISSN: 0146-9592**

**Description**

L'invention concerne un système lidar ainsi qu'un radar pouvant fonctionner en continu. Le signal laser ou micro-onde émis ainsi que l'oscillateur local permettant la détection sont générés à partir d'une source laser dont la longueur de cohérence détermine la résolution en distance du système.

Les performances des composants optoélectroniques permettent aujourd'hui la transmission sur porteuse optique de signaux micro-ondes jusqu'à des fréquences de l'ordre de 40 GHz. Ces liaisons permettent donc de couvrir l'ensemble des bandes de fréquences des systèmes radar et de contre-mesure. La réalisation de telles liaisons au moyen de fibres optiques permet la génération de retards importants, sans pratiquement de dispersion ni de distorsion au niveau des signaux micro-ondes transmis.

Par ailleurs, l'augmentation de la discrétion des systèmes radar passe par une réduction de la puissance crête émise. Le maintien de la portée du radar et de sa résolution en distance passe alors par l'élaboration et le traitement de formes d'onde complexes.

Une solution possible à ce problème, qui apporte en outre une résistance au brouillage accrue consisterait à réaliser un radar continu à bruit. La réalisation d'un tel radar passe par celle de lignes à retards non dispersives reconfigurables et surtout par la réalisation de « bruits » que le traitement radar est capable de corréler.

Le document FR 2 688 900 décrit un procédé utilisant une surmodulation périodique superposée au codage normal de manière à faire disparaître le signal utile de battement en dehors d'une case distance présélectionnée.

Afin de réaliser un lidar ainsi qu'un radar continu, on propose de transposer les signaux hyperfréquence à émettre sur une porteuse optique faiblement cohérente. La faible cohérence de la source laser détermine la résolution en distance du système.

L'invention concerne donc un système lidar comprenant un laser présentant un temps de cohérence déterminé transmettant un faisceau optique à la fois vers un premier translateur de fréquence et un deuxième translateur de fréquence, le premier translateur transmettant deux premiers faisceaux décalés d'au moins une fréquence déterminée et décalés dans le temps d'un premier temps déterminé nettement supérieur audit temps de cohérence, ces faisceaux étant destinés à être transmis vers une cible, laquelle réfléchit les faisceaux vers une première photodiode qui fournit en échange un premier signal de battement à un mélangeur ; le deuxième translateur transmettant deux deuxièmes faisceaux décalés d'au moins une deuxième fréquence déterminée et décalés dans le temps d'un deuxième temps déterminé nettement supérieur au temps de cohérence ; ces deuxièmes faisceaux étant transmis à une ligne à retard optique qui fournit les deuxièmes faisceaux retardés à une deuxième photodiode, laquelle fournit un deuxième signal de battement audit mélangeur qui fournit un signal à filtre fréquentiel centré sur la différence de la première et de la deuxième fréquences.

L'invention concerne également un système radar caractérisé en ce qu'il comprend un laser présentant un temps de cohérence déterminé transmettant un faisceau optique à la fois vers un premier translateur de fréquence et un deuxième translateur de fréquence, le premier translateur transmettant deux premiers faisceaux décalés d'au moins une fréquence déterminée et décalés dans le temps d'un premier temps déterminé nettement supérieur audit temps de cohérence, ces faisceaux étant transmis à une troisième photodiode qui fournit en échange un signal hyperfréquence à un élément d'antenne qui le retransmet vers une cible, laquelle réfléchit le signal hyperfréquence vers un élément d'antenne qui fournit un signal détecté à un mélangeur ; le deuxième translateur transmettant deux deuxièmes faisceaux décalés d'au moins une deuxième fréquence déterminée et décalés dans le temps d'un deuxième temps déterminé nettement supérieur au temps de cohérence ; ces deuxièmes faisceaux étant transmis à une ligne à retard optique qui fournit les deuxièmes faisceaux retardés à une deuxième photodiode, laquelle fournit un signal de battement audit mélangeur qui fournit un signal à filtre fréquentiel centré sur la différence de la première et de la deuxième fréquences.

Les différents objets et caractéristiques de l'invention apparaîtront plus clairement dans la description faite à titre d'exemple et dans les figures annexées qui représentent :

- la figure 1, un exemple de réalisation d'un lidar selon l'invention ;
- la figure 2, un exemple de décaleur de fréquence optique ;
- la figure 3, un exemple d'une ligne à retard optique ;
- la figure 4, un exemple de radar selon l'invention ;
- la figure 5, un exemple de réalisation d'une ligne à retard.

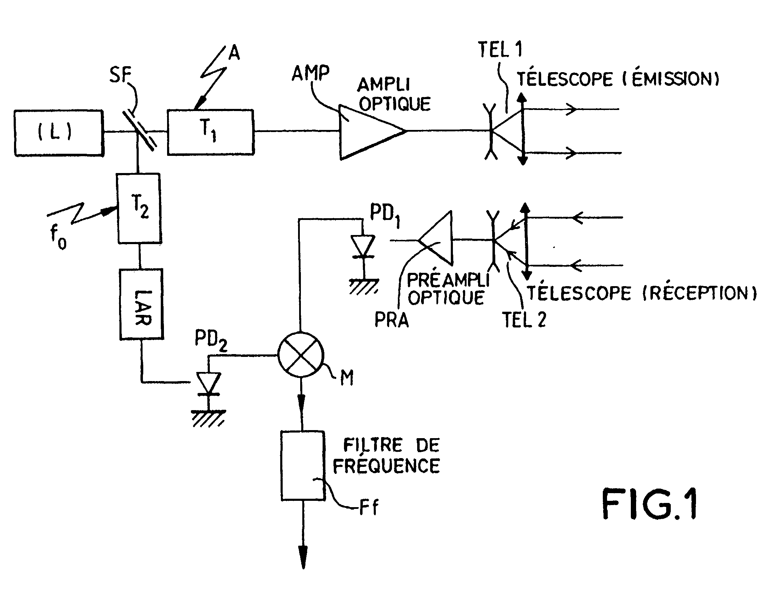

En se reportant à la figure 1, on va tout d'abord décrire un exemple de l'invention appliqué à un système lidar. La source laser L fournit un faisceau monochromatique centré autour d'une fréquence $\omega$. Cette source laser présente une longueur de cohérence l, à laquelle correspondent un temps de cohérence $\Delta t$ et une largeur de raie $\Delta \nu$ telles que :

$$1 = c.\Delta t = c/\Delta \nu$$

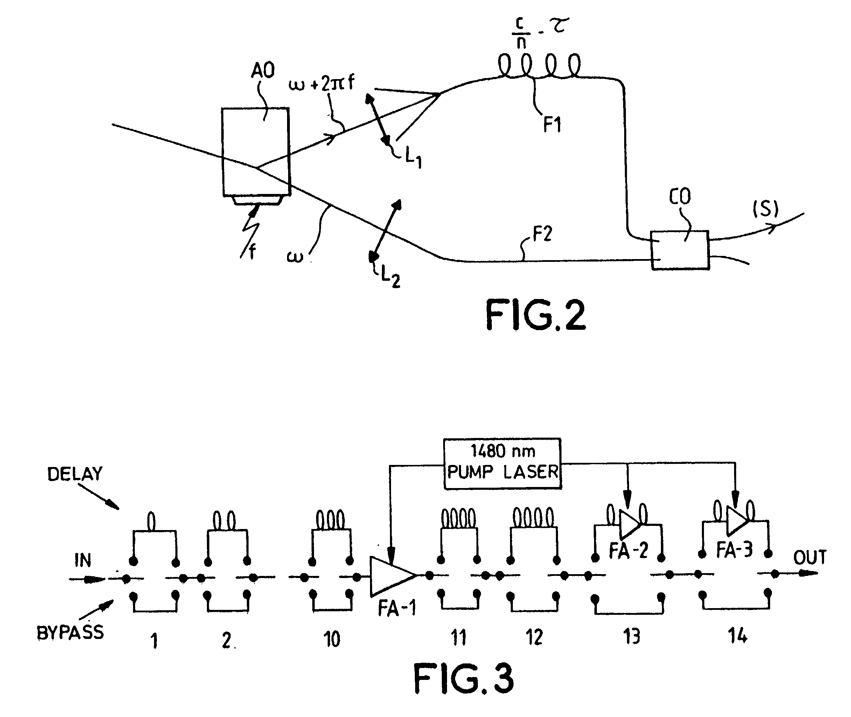

Ce faisceau est divisé en deux par le séparateur SF. Une partie du faisceau traverse alors un dispositif $T_1$ de translation de fréquence, excité par exemple par un signal micro-onde à la fréquence f. Cette fréquence peut être variable au cours du temps ou représenter la fréquence centrale d'un spectre large. Un exemple de réalisation du dispositif $T_1$ est présenté sur la figure 2.

Selon la figure 2, le faisceau laser est dans ce cas focalisé dans une cellule de Bragg acousto-optique AO excitée par le signal f à transmettre. En sortie de cette cellule AO, on obtient donc un faisceau transmis à la fréquence optique $\omega$ et un faisceau diffracté à la fréquence $\omega+2\pi f$. Ce faisceau diffracté est alors couplé au moyen d'une lentille $L_1$ dans une fibre F1 d'indice n et de longueur $I_1$. De même, le faisceau transmis est couplé dans une fibre F2 d'indice n et de longueur $I_2$. La différence de longueur entre les deux fibres induit un retard $\tau$ entre les deux faisceaux. Les deux fibres sont ensuite connectées à un coupleur de manière à obtenir un faisceau bifréquence $\omega$, $\omega+2\pi f$. Dans le cas où $\tau$ est faible (< 1 ns), les fibres peuvent être remplacées par une propagation en espace libre.

En sortie de $T_1$, on dispose donc d'un faisceau optique où sont superposés les deux champs électriques :

$$E_1 \cos (\omega t + \phi(t))$$

$$E_2 \cos [(\omega+2\pi f) (t - \tau) + \phi(t-\tau)]$$

où $\phi(t)$ est fa phase aléatoire qui rend compte de la largeur de raie de la source. Dans le cas où la source est un laser à semiconducteur, $\phi(t)$ et $\Delta \upsilon$ sont reliées par :

$$< (\phi(t + t') - \phi(t))^2 > = 2\pi.\Delta \nu t'$$

Ce faisceau bifréquence est ensuite détecté par la photodiode $PD_1$, dont la bande passante permet la détection de signaux à f. Dans ce cas, elle fournit, en plus d'un photocourant continu, un signal de battement :

$$i_m (t) = i_o \cos [2\pi f (t - \tau) - \omega\tau + \phi(t - \tau) - \phi(t)]$$

Selon l'invention on prévoit que le retard T est grand devant le temps de cohérence $\Delta t$. Le signal f est noyé dans le bruit $\phi(t - \tau) - \phi(t)$. Comme cela a été démontré dans l'article de D. DOLFI et al. « Optically controlled true time delay for phased array antenna », Proc. SPIE, vol. 1102, p. 152, 1989, le spectre de fréquence du photocourant apparaît comme la somme d'un Dirac à la fréquence f et d'une fonction quasi lorentzienne de largeur $2\Delta \nu$ lorsque $\tau$ tend vers l'infini.

Selon l'invention, on choisit les deux fibres et la source L de façon que la différence de retard $\tau$ soit nettement supérieure au temps de cohérence $\Delta t$. Ainsi, le signal optique fortement bruité est amplifié au moyen d'un ampli large bande AMP qui en préserve les caractéristiques. Le faisceau bifréquence amplifié est émis dans l'espace libre au travers d'un télescope TEL1. L'amplificateur est par exemple un amplificateur à fibre dopée Erbium dans le cas d'un fonctionnement à $\lambda = 1,5\ \mu m$. Pour d'autres longueurs d'onde ce peut être un ampli optique à semiconducteur ou un ampli laser de type Nd:Yag. Le faisceau bifréquence est réfléchi par une cible située à une distance T.

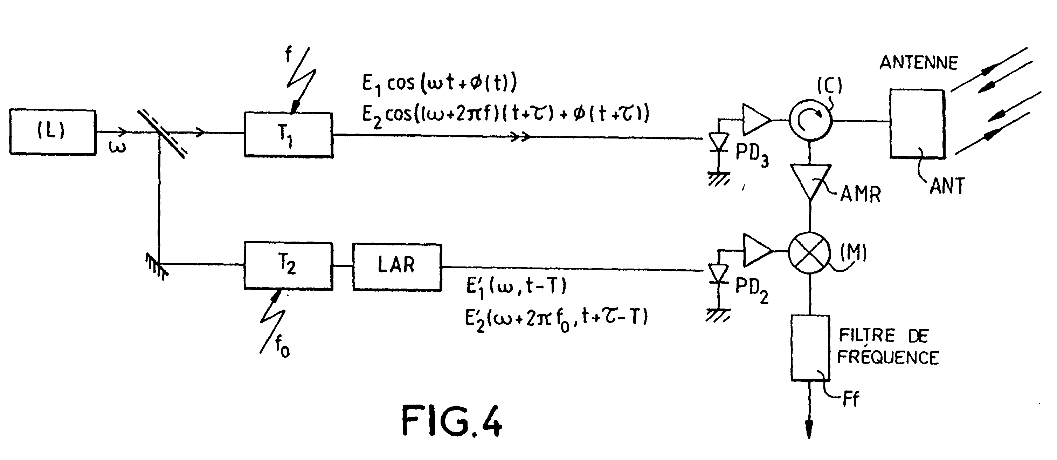

La détection peut se faire au travers du même télescope ou comme cela est représenté sur la figure 4, au travers d'un second télescope TEL2, éventuellement accouplé à un pré-ampli optique de détection PRA. Le signal réfléchi par une cible ou un transpondeur est alors détecté par un photodétecteur $PD_1$.

Le signal réfléchi est de la forme :

$$R(t) = R_0 \cos [2\pi f (t - T - \tau) - \omega\tau + \phi(t - T - \tau) - \phi(t - T)]$$

Par ailleurs, la deuxième partie du faisceau issue du laser L travers un deuxième dispositif de translation de fréquence $T_2$. Ce dernier est de même nature que le translateur $T_1$, fonctionnant également avec un retard $\tau$ mais est excité par un signal à la fréquence $f_0$.

A la sortie du translateur $T_2$, le faisceau bifréquence traverse une ligne à retards variable LAR, réalisée par exemple au moyen de fibres optiques commutées comme cela est décrit sur la figure 3. La ligne à retard fournit un retard maximum correspondant à la portée maximale du lidar avec une précision d'incrément de l'ordre de sa résolution en distance. Lorsque la ligne à retard est configurée de manière à fournir le retard T', le faisceau bifréquence contient les champs :

$$E'_1 \cos [\omega(t - T') + \phi(t - T')]$$

$$E'_2 \cos [(\omega + 2\pi f_o) (t - T' - \tau) + \phi (t - T' - \tau)]$$

Dans ce cas, la photodiode $PD_2$ détectant ce faisceau fournit, en plus d'un photocourant continu, un signal de battement :

$$i_{oL} (t) = i_{oL} \cos [2\pi f_o (t - T' - \tau) - \omega\tau + \phi (t - T' - \tau) - \phi (t - T')]$$

Ce signal qui joue ici le rôle d'un oscillateur local, est alors appliqué sur le mélangeur M, simultanément au signal reçu R(t) par la photodiode PD1. Après passage au travers d'un filtre fréquentiel centré sur f - $f_o$ et compatible avec le spectre du bruit de phase $\phi(t)$, on obtient (à condition que les retards $\tau$ fournis par $T_1$ et $T_2$ soient identiques) (dans le cas contraire, un terme de phase constant supplémentaire est à considérer) un signal proportionnel à :

$$i_{oL}.R_o.\cos [2\pi (f-f_o) (t-\tau) - 2\pi fT + 2\pi f_o T' + \phi (t-T-\tau) - \phi (t-T'-\tau) + \phi (t-T') - \phi (t - T)]$$

Dès que [T - T'] > $\tau$ et puisque $\tau$ » $\Delta$t, la contribution du bruit $\phi(t)$ est prépondérante et le signal pertinent à la fréquence f - $f_o$ est masqué.
Au contraire, dès que T = T', il y a soustraction cohérente des termes de bruit et le signal f - $f_o$ est restitué. Ce signal permet donc d'estimer la distance à laquelle se situe la cible et éventuellement sa vitesse par un traitement Doppler approprié.
Pour qu'il y ait soustraction cohérente des bruits de phase, il est nécessaire que [T - T'] << $\Delta$t. C'est donc bien la longueur de cohérence du laser L qui fixe la résolution en distance de ce système.
Ce système lidar fonde donc sa résolution distance sur la longueur de cohérence du laser et permet dans une case distance déterminée l'évaluation par analyse Doppler de la vitesse de cible.
Un tel lidar peut être réalisé avec des composants optoélectroniques permettant d'obtenir :

- f $\simeq$ 100 MHz à 3 GHz
- f - $f_o$ qqs MHz à quelques 10 MHz
- $\Delta\nu \simeq$ 1 GHz jusqu'à 100 GHz pour un télémètre extrêmement précis (analyse de vibration de surface par exemple au moyen d'une diode électroluminescente à très faible longueur de cohérence).
- l $\simeq$ 0,3 m

La figure 4 représente un exemple de radar appliquant le système lidar de la figure 1. Dans ce radar, le faisceau bifréquence fourni par le translateur T est transmis à une photodiode PD3 qui émet un signal de battement, lequel est transmis par l'antenne ANT vers une cible distance.
Le signal réfléchi par la cible est reçu par l'antenne et est transmis par le circulateur C et l'amplificateur AMR au mélangeur M.
Par ailleurs, le faisceau bifréquence F fourni par le translateur T2 et la ligne à retard optique est transmis à la photodiode PD2 qui fournit un signal de battement au mélangeur M. Comme dans le cas du lidar, le mélangeur fournit un signal au filtre de fréquence centré sur la fréquence f - $f_o$.
Les valeurs des fréquences et retards des translateurs T1 et T2 peuvent être choisis comme décrit précédemment dans le cas du lidar.
A titre d'exemple un tel radar pourra avoir des composants optoélectroniques permettant d'obtenir :

f = 3 GHz
f - $f_o$ = quelques 10 MHz
$\Delta\nu$ = 1 GHz
l = 0,3 m

L'invention est applicable à un système de communication. En effet, le dispositif proposé peut être modifié afin de devenir un système de communication discret. Dans ce cas, la cible est remplacée par une cible coopérante, dotée d'un transpondeur, capable de surmoduler le signal reçu. Dans ce cas, le signal reçu au niveau de l'antenne porte une information. Le bruit de phase du laser permet alors de choisir le transpondeur interrogé en fonction de sa distance (résolution distance) et ainsi d'échapper aux brouilleurs ayant une autre localisation. De plus, même en cas d'interception, le signal ne peut être décodé, à moins d'être capable de synthétiser, en temps réel, le bruit du laser ou du lidar.

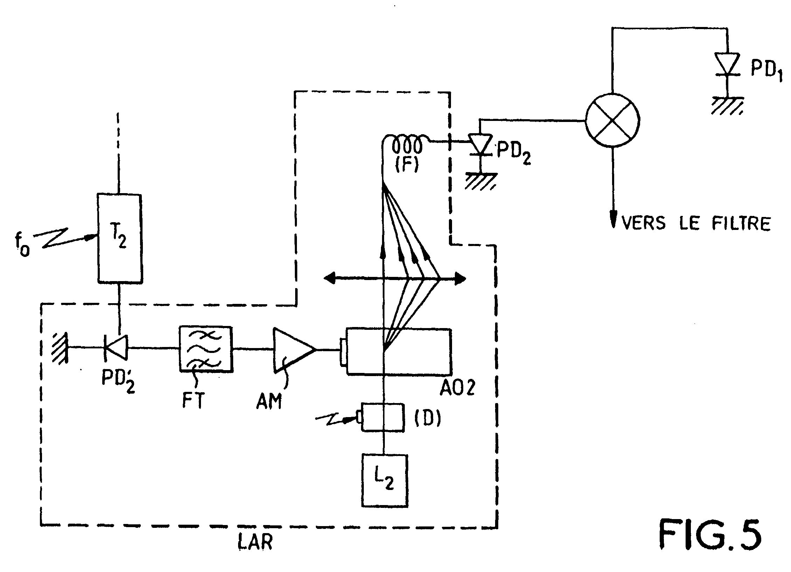

Cette variante décrit une solution alternative à la réalisation de la ligne à retards variables nécessaire au fonctionnement du dispositif proposé (lidar ou radar). Le principe de fonctionnement de cette ligne à retard est décrit sur la figure 5. Le faisceau laser issu du translateur T2 de la figure 4 est détecté par la photodiode $PD_2$. Cette dernière fournit alors le signal bruité précédemment décrit. Celui-ci peut être éventuellement filtré par un filtre FT puis il est amplifié (amplificateur A) et appliqué à une cellule de Bragg acousto-optique AO2. Par ailleurs, le faisceau issu d'un deuxième laser $L_2$ est focalisé dans AO2 après être passé dans un système de déflexion D (par exemple un déflecteur acousto-optique). Ce dernier permet d'ajuster la position du faisceau issu de $L_2$ dans la cellule AO2. On peut ainsi contrôler le temps de propagation de l'onde acoustique reproduisant le signal issu de PD2', depuis le transducteur de AO2 jusqu'au point de focalisation. Chaque fréquence contenue dans ce signal électrique amplifié diffracte une partie du faisceau de $L_2$. L'ensemble de ces faisceaux est ensuite couplé dans une fibre monomode F dont la longueur est choisie en fonction du domaine de distances à traiter par le télémètre. Elle assure en outre la superposition des composantes fréquentielles du faisceau issu de AO. La détection par $PD_2$ de ce faisceau multifréquence restitue une réplique retardée du signal issu de $PD'_2$.

Compte tenu des performances des composants acousto-optiques on peut envisager, par exemple dans $TeO_2$, de disposer d'une ligne à retards variables de Tmax = 5 µs et présentant une résolution de l'ordre de 2 à 5 ns, correspondant à une précision en distance de l'ordre du mètre.

La génération du signal hyperfréquence f et celle du brouillage/codage $\phi(t)$ sont indépendantes. Ainsi, le synthétiseur micro-onde et le laser peuvent être optimisés séparément. Un fonctionnement continu et donc à faible niveau de puissance est possible.

Le fonctionnement décrit, fondé sur la corrélation du signal réfléchi par la cible et d'un échantillon retardé du signal émis, permet de se satisfaire d'un synthétiseur aux performances dégradées en terme de pureté spectrale.

**Revendications**

1. Système lidar comprenant un laser (L) présentant un temps de cohérence ($\Delta t$) déterminé transmettant un faisceau optique à la fois vers un premier translateur de fréquence (T1) et un deuxième translateur de fréquence (T2), le premier translateur (T1) transmettant deux premiers faisceaux décalés d'au moins une fréquence (f) déterminée et décalés dans le temps d'un premier temps déterminé ($\tau$) nettement supérieur audit temps de cohérence ($\Delta t$), ces faisceaux étant destinés à être transmis vers une cible, laquelle réfléchit les faisceaux vers une première photodiode (PD1) qui fournit en échange un premier signal de battement à un mélangeur (M) ; le deuxième translateur (T2) transmettant deux deuxièmes faisceaux décalés d'au moins une deuxième fréquence ($f_o$) déterminée et décalés dans le temps d'un deuxième temps déterminé ($\tau'$) nettement supérieur au temps de cohérence ($\Delta t$) ; ces deuxièmes faisceaux étant transmis à une ligne à retard optique (LAR) qui fournit les deuxièmes faisceaux retardés à une deuxième photodiode (PD2), laquelle fournit un deuxième signal de battement audit mélangeur (M) qui fournit un signal à filtre fréquentiel centré sur la différence ($f-f_o$) de la première et de la deuxième fréquences.

2. Système selon la revendication 1, **caractérisé en ce que** le premier temps déterminé ($\tau$) et le deuxième temps déterminé ($\tau'$) sont égaux.

3. Système selon la revendication 1, **caractérisé en ce que** la première fréquence (f) et la deuxième fréquence ($f_o$) sont des fréquences variables.

4. Système selon la revendication 1, **caractérisé en ce que** la première fréquence (f) et la deuxième fréquence ($f_o$) sont des fréquences centrales de bandes de fréquences.

5. Système selon la revendication 1, **caractérisé en ce que** chaque translateur de fréquence (T1, T2) comporte une cellule acousto-optique excitée par un signal de fréquence (f, $f_o$) recevant le faisceau optique de longueur d'onde déterminée $\omega$ et fournissant un faisceau diffracté de même longueur d'onde $\omega$ et un faisceau transmis de longueur d'onde $\omega + 2\pi f$, les deux faisceaux étant transmis à un même coupleur (CO) par l'intermédiaire de deux chemins optiques de longueurs différentes.

6. Système selon la revendication 1, **caractérisé en ce que** la ligne à retard optique (LAR) comporte plusieurs chemins optiques commutables permettant d'obtenir plusieurs combinaisons de chemins optiques de longueurs différentes.

7. Système radar **caractérisé en ce qu'**il comprend un laser (L) présentant un temps de cohérence ($\Delta t$) déterminé transmettant un faisceau optique à la fois vers un premier translateur de fréquence (T1) et un deuxième translateur de fréquence (T2), le premier translateur (T1) transmettant deux premiers faisceaux décalés d'au moins une fréquence (f) déterminée et décalés dans le temps d'un premier temps déterminé ($\tau$) nettement supérieur audit temps de cohérence ($\Delta t$), ces faisceaux étant transmis à une troisième photodiode (PD3) qui fournit en échange un signal hyperfréquence à un élément d'antenne (ANT) qui le retransmet vers une cible, laquelle réfléchit le signal hyperfréquence vers un élément d'antenne (ANT) qui fournit un signal détecté à un mélangeur (M) ; le deuxième translateur (T2) transmettant deux deuxièmes faisceaux décalés d'au moins une deuxième fréquence ($f_o$) déterminée et décalés dans le temps d'un deuxième temps déterminé ($\tau'$) nettement supérieur au temps de cohérence ($\Delta t$) ; ces deuxièmes faisceaux étant transmis à une ligne à retard optique (LAR) qui fournit les deuxièmes faisceaux retardés à une deuxième photodiode (PD2), laquelle fournit un signal de battement audit mélangeur (M) qui fournit un signal à filtre fréquentiel centré sur la différence ($f-f_o$) de la première et de la deuxième fréquences.

8. Système selon la revendication 7, **caractérisé en ce que** le premier temps déterminé ($\tau$) et le deuxième temps déterminé ($\tau'$) sont égaux.

9. Système selon la revendication 7, **caractérisé en ce que** la première fréquence (f) et la deuxième fréquence ($f_o$) sont des fréquences variables.

10. Système selon la revendication 7, **caractérisé en ce que** la première fréquence (f) et la deuxième fréquence ($f_o$) sont des fréquences centrales de bandes de fréquences.

11. Système selon la revendication 7, **caractérisé en ce que** chaque translateur de fréquence (T1, T2) comporte une cellule acousto-optique excitée par un signal de fréquence (f, $f_o$) recevant le faisceau optique de longueur d'onde déterminée $\omega$ et fournissant un faisceau diffracté de même longueur d'onde $\omega$ et un faisceau transmis de longueur d'onde $\omega + 2\pi f$, les deux faisceaux étant transmis à un même coupleur (CO) par l'intermédiaire de deux chemins optiques de longueurs différentes.

12. Système selon la revendication 7, **caractérisé en ce que** la ligne à retard optique (LAR) comporte plusieurs chemins optiques commutables permettant d'obtenir plusieurs combinaisons de chemins optiques de longueurs différentes.

**Claims**

1. Lidar system comprising a laser (L) having a defined coherence time ($\Delta t$), transmitting an optical beam both to a first frequency translator (T1) and a second frequency translator (T2), the first translator (T1) transmitting two first beams shifted by at least one defined frequency (f) and shifted in time by a first defined time ($\tau$) that is substantially longer than the said coherence time ($\Delta t$), these beams being intended to be transmitted to a target that reflects the beams onto a first photodiode (PD1) which delivers in exchange a first deflection signal to a mixer (M), the second translator (T2) transmitting two second beams shifted by at least one second defined frequency ($f_0$) and shifted in time by a second defined time ($\tau'$) that is substantially longer than the coherence time ($\Delta t$); these second beams being transmitted to an optical delay line (ODL) that delivers the second delayed beams to a second photodiode (PD2), which photodiode delivers a second deflection signal to the said mixer (M) that delivers a frequency filter signal centred on the difference ($f-f_0$) between the first and second frequencies.

2. System according to Claim 1, **characterized in that** the first defined time ($\tau$) and the second defined time ($\tau'$) are equal.

3. System according to Claim 1, **characterized in that** the first frequency (f) and the second frequency ($f_0$) are variable frequencies.

4. System according to Claim 1, **characterized in that** the first frequency (f) and the second frequency ($f_0$) are central frequencies of frequency bands.

**5.** System according to Claim 1, **characterized in that** each frequency translator (T1, T2) includes an acoustooptic cell excited by a signal of frequency (f, $f_0$), which receives the optical beam of defined wavelength $\omega$ and delivers a diffracted beam of the same wavelength $\omega$ and a transmitted beam of wavelength $\omega + 2\pi f$, the two beams being transmitted to the same coupler (CO) via two optical paths of different lengths.

**6.** System according to Claim 1, **characterized in that** the optical delay line (ODL) comprises several switchable optical paths allowing several combinations of optical paths of different lengths to be obtained.

**7.** Radar system, **characterized in that** it comprises a laser (L) having a defined coherence time ($\Delta t$), which transmits an optical beam both to a first frequency translator (T1) and a second frequency translator (T2), the first translator (T1) transmitting two first beams shifted by at least one defined frequency (f) and shifted in time by a first defined time ($\tau$) that is substantially longer than the said coherence time ($\Delta t$), these beams being transmitted to a third photodiode (PD3) which delivers in exchange a microwave signal to an antenna element (ANT) which transmits it to a target, which target reflects the microwave signal onto an antenna element (ANT) that delivers a detected signal to a mixer (M), the second translator (T2) transmitting two beams shifted by at least one second defined frequency ($f_0$) and shifted in time by a second defined time ($\tau'$) that is substantially longer than the coherence time ($\Delta t$), these two beams being transmitted to an optical delay line (ODL) that delivers the second delayed beams to a second photodiode (PD2), which photodiode delivers a deflection signal to the said mixer (M) that delivers a frequency filter signal centred on the difference ($f-f_0$) between the first and second frequencies.

**8.** System according to Claim 7, **characterized in that** the first defined time ($\tau$) and the second defined time ($\tau'$) are equal.

**9.** System according to Claim 7, **characterized in that** the first frequency (f) and the second frequency ($f_0$) are variable frequencies.

**10.** System according to Claim 7, **characterized in that** the first frequency (f) and the second frequency ($f_0$) are central frequencies of frequency bands.

**11.** System according to Claim 7, **characterized in that** each frequency translator (T1, T2) includes an acoustooptic cell excited by a signal of frequency (f, $f_0$), which receives the optical beam of defined wavelength $\omega$ and delivers a diffracted beam of the same wavelength $\omega$ and a transmitted beam of wavelength $\omega + 2\pi f$, the two beams being transmitted to the same coupler (CO) via two optical paths of different lengths.

**12.** System according to Claim 7, **characterized in that** the optical delay line (ODL) comprises several switchable optical paths allowing several combinations of optical paths of different lengths to be obtained.

**Patentansprüche**

**1.** Lidarsystem, das einen Laser (L) mit bestimmter Kohärenzzeit ($\Delta t$) aufweist, der einen optischen Strahl sowohl zu einem ersten Frequenzübertrager (T1) als auch zu einem zweiten Frequenzübertrager (T2) überträgt, wobei der erste Übertrager (T1) zwei erste um mindestens eine bestimmte Frequenz (f) verschobene und um eine erste bestimmte Zeit ($\tau$), die deutlich über der Kohärenzzeit ($\Delta t$) liegt, zeitverschobene Strahlen überträgt, wobei diese Strahlen dazu bestimmt sind, zu einem Ziel übertragen zu werden, das die Strahlen zu einer ersten Photodiode (PD1) reflektiert, die im Austausch ein erstes Schwebungssignal an eine Mischstufe (M) liefert; wobei der zweite Übertrager (T2) zwei um mindestens eine zweite bestimmte Frequenz ($f_0$) verschobene und um eine zweite bestimmte Zeit ($\tau'$), die deutlich über der Kohärenzzeit ($\Delta t$) liegt, zeitverschobene zweite Strahlen überträgt; wobei diese Strahlen an eine optische Verzögerungsleitung (LAR) übertragen werden, die die zweiten verzögerten Strahlen an eine zweite Photodiode (PD2) liefert, die ein zweites Schwebungssignal an die Mischstufe (M) liefert, die ein Signal mit auf die Differenz ($f-f_0$) zwischen der ersten und der zweiten Frequenz zentriertem Frequenzfilter liefert.

**2.** System nach Anspruch 1, **dadurch gekennzeichnet, dass** die erste bestimmte Zeit ($\tau$) und die zweite bestimmte Zeit ($\tau'$) gleich sind.

**3.** System nach Anspruch 1, **dadurch gekennzeichnet, dass** die erste Frequenz (f) und die zweite Frequenz ($f_0$) variable Frequenzen sind.

4. System nach Anspruch 1, **dadurch gekennzeichnet, dass** die erste Frequenz (f) und die zweite Frequenz ($f_0$) Mittenfrequenzen von Frequenzbändern sind.

5. System nach Anspruch 1, **dadurch gekennzeichnet, dass** jeder Frequenzübertrager (T1, T2) eine von einem Frequenzsignal (f, $f_0$) erregte akustooptische Zelle aufweist, die den optischen Strahl von bestimmter Wellenlänge ω empfängt und einen gebeugten Strahl der gleichen Wellenlänge ω und einen übertragenen Strahl der Wellenlänge ω+2πf liefert, wobei die beiden Strahlen über zwei optische Wege unterschiedlicher Länge an den gleichen Koppler (CO) übertragen werden.

6. System nach Anspruch 1, **dadurch gekennzeichnet, dass** die optische Verzögerungsleitung (LAR) mehrere umschaltbare optische Wege aufweist, die es ermöglichen, mehrere Kombinationen optischer Wege mit unterschiedlichen Längen zu erhalten.

7. Radarsystem, **dadurch gekennzeichnet, dass** es einen Laser (L) mit bestimmter Kohärenzzeit (Δt) aufweist, der einen optischen Strahl sowohl zu einem ersten Frequenzübertrager (T1) als auch zu einem zweiten Frequenzübertrager (T2) überträgt, wobei der erste Übertrager (T1) zwei erste um mindestens eine bestimmte Frequenz (f) verschobene und um eine erste bestimmte Zeit (τ) , die deutlich über der Kohärenzzeit (Δt) liegt, zeitverschobene Strahlen überträgt, wobei diese Strahlen zu einer dritten Photodiode (PD3) übertragen werden, die im Austausch ein Höchstfrequenzsignal an ein Antennenelement (ANT) liefert, das es an ein Ziel weiterleitet, welches das Höchstfrequenzsignal zu einem Antennenelement (ANT) reflektiert, das ein erfasstes Signal an eine Mischstufe (M) liefert; wobei der zweite Übertrager (T2) zwei um mindestens eine zweite bestimmte Frequenz ($f_0$) verschobene und um eine zweite bestimmte Zeit (τ'), die deutlich über der Kohärenzzeit (Δt) liegt, zeitverschobene zweite Strahlen überträgt, wobei diese zweiten Strahlen an eine optische Verzögerungsleitung (LAR) übertragen werden, die die zweiten verzögerten Strahlen an eine zweite Photodiode (PD2) liefert, die ein zweites Schwebungssignal an die Mischstufe (M) liefert, die ein Signal mit auf die Differenz (f-$f_0$) zwischen der ersten und der zweiten Frequenz zentriertem Frequenzfilter liefert.

8. System nach Anspruch 7, **dadurch gekennzeichnet, dass** die erste bestimmte Zeit (τ) und die zweite bestimmte Zeit (τ') gleich sind.

9. System nach Anspruch 7, **dadurch gekennzeichnet, dass** die erste Frequenz (f) und die zweite Frequenz ($f_0$) variable Frequenzen sind.

10. System nach Anspruch 7, **dadurch gekennzeichnet, dass** die erste Frequenz (f) und die zweite Frequenz ($f_0$) Mittenfrequenzen von Frequenzbändern sind.

11. System nach Anspruch 7, **dadurch gekennzeichnet, dass** jeder Frequenzübertrager (T1, T2) eine von einem Frequenzsignal (f, $f_0$) erregte akustooptische Zelle aufweist, die den optischen Strahl von bestimmter Wellenlänge ω empfängt und einen gebeugten Strahl der gleichen Wellenlänge ω und einen übertragenen Strahl der Wellenlänge ω+2πf liefert, wobei die beiden Strahlen über zwei optische Wege unterschiedlicher Länge an den gleichen Koppler (CO) übertragen werden.

12. System nach Anspruch 7, **dadurch gekennzeichnet, dass** die optische Verzögerungsleitung (LAR) mehrere umschaltbare optische Wege aufweist, die es ermöglichen, mehrere Kombinationen optischer Wege mit unterschiedlichen Längen zu erhalten.

FIG.1

EP 1 014 110 B1

**FIG.2**

**FIG.3**

EP 1 014 110 B1

ANTENNE

$E_1 \cos(\omega t + \phi(t))$

$E_2 \cos(\omega + 2\pi f)(t+\tau) + \phi(t+\tau)$

(L)

$\omega$

$f$

$T_1$

(C)

PD$_3$

ANT

AMR

$T_2$

LAR

$E_1'(\omega, t-T)$

$E_2'(\omega + 2\pi f_0, t+\tau - T)$

$f_0$

PD$_2$

(M)

FILTRE DE FRÉQUENCE

Ff

## FIG.4

FIG.5